# EUROPÄISCHE PATENTSCHRIFT

(11) **EP 0 799 548 B1**
(45) Veröffentlichungstag und Bekanntmachung des Hinweises auf die Patenterteilung: **03.06.1998**
(21) Anmeldenummer: 95936978.6
(22) Anmeldetag: 23.11.1995
(51) Int. Cl.: H04N 5/44, H04N 5/907

(54) **FERNSEHGERÄT MIT MEHREREN SIGNALVERARBEITUNGSEINRICHTUNGEN**
TELEVISION SET WITH A PLURALITY OF SIGNAL PROCESSING DEVICES
TELEVISEUR A PLUSIEURS UNITES DE TRAITEMENT DES SIGNAUX

(30) Priorität: 21.12.1994 DE 4445803
(43) Veröffentlichungstag der Anmeldung: 08.10.1997
(73) Patentinhaber: SIEMENS AKTIENGESELLSCHAFT, 80333 München (DE)
(72) Erfinder: SCHWENDT, Ralf, D-85609 Aschheim (DE); VON REVENTLOW, Christian, D-80469 München (DE)
(86) Internationale Anmeldenummer: DE9501661
(87) Internationale Veröffentlichungsnummer: WO9619894

(56) Entgegenhaltungen:
- EP-A- 0 459 800
- WO-A-94/26066
- US-A- 4 809 069
- PATENT ABSTRACTS OF JAPAN vol. 11 no. 177 (P-583) ,6.Juni 1987 & JP,A,62 006365 (NIPPON DENZAI KOGYO KENKYUSHO K.K.) 13.Januar 1987,
- PATENT ABSTRACTS OF JAPAN vol. 15 no. 209 (E-1072) ,28.Mai 1991 & JP,A,03 058582 (TOSHIBA CORP.) 13.März 1991,
- PATENT ABSTRACTS OF JAPAN vol. 7 no. 256 (P-236) ,15.November 1983 & JP,A,58 140863 (TATEISHI DENKI K.K.) 20.August 1983,
- PATENT ABSTRACTS OF JAPAN vol. 18 no. 234 (E-1543) ,28.April 1994 & JP,A,06 022237 (SHARP CORP.) 28.Januar 1994,

## Beschreibung

Die Erfindung betrifft ein Fernsehgerät mit einer ersten und einer zweiten Signalverarbeitungseinrichtung und Speichermitteln, auf die die Einrichtungen zugreifen.

Fernsehgeräte weisen heutzutage eine Reihe von digitalen Signalverarbeitungseinrichtungen auf, beispielsweise Einrichtungen zur Erhöhung der Zeilenfrequenz, um Flimmern zu reduzieren, Einrichtungen zur Bild-im-Bild-Einblendung, Einrichtungen zur Teletext- und Grafikverarbeitung, Einrichtungen zur digitalen Audiosignalverarbeitung, Einrichtungen zur Rauschreduktion von Audio- und Videosignalen, Einrichtungen zur Dekomprimierung von digital zugeführten Signalen etc. Bei diesen digitalen Signalverarbeitungsverfahren werden die jeweiligen Eingabe- und/oder Ausgabedaten in Halbleiterspeichern zwischengespeichert. Die zu speichernde Datenmenge ist in den angegebenen Fällen relativ hoch. Beispielsweise benötigen bekannte Verfahren zur Zeilenflimmerbefreiung eine Speicherkapazität für mindestens zwei Halbbilder. Bei der Bild-im-Bildeinblendung ist eine Speicherkapazität für ein oder zwei dezimierte, einzublendende Halbbilder notwendig und gegebenenfalls ein Zeilenspeicher. Für hoch auflösende Teletextsignalverarbeitung ist ein Vollbild mit den entsprechenden zugeordneten Attributen zwischenzuspeichern. Bei der Dekomprimierung von Videosignaldaten, die in bezug auf vorhandene Bewegung kodiert sind, sind Speicher für mehrere Halbbilder notwendig.

Bislang werden die einzelnen Signalverarbeitungsverfahren von Einrichtungen ausgeführt, die in voneinander getrennten integrierten Schaltungen realisiert sind. Der für jedes Signalverarbeitungsverfahren benötigte Arbeitsspeicher ist nur der jeweiligen Einrichtung zugeordnet, und es kann nur von dem von der Einrichtung ausgeführten Verfahren auf den zugeordneten Speicher zugegriffen werden. Oftmals ist der jeweilige Arbeitsspeicher zusammen mit den das Signalverarbeitungsverfahren realisierenden Schaltungskomponenten auf dem gleichen integrierten Schaltungschip angeordnet. Es hat sich auch gezeigt, daß Signalverarbeitungsverfahren, die eine höhere Wiedergabequalität liefern, eine höhere Speicherkapazität erfordern. Beispielsweise sind Bild-im-Bildeinblendungsverfahren bekannt, die nur eine Speicherkapazität von einem dezimierten Halbbild benötigen. Dies führt zu einem erheblichen Schärfeverlust in der Darstellung des einzublendenden Bildes. Mit Bild-im-Bildeinblendungsverfahren, für die zwei dezimierte Halbbilder zwischenzuspeichern sind, wird dieser Schärfeverlust behoben und darüber hinaus kann gegebenenfalls ein Bildschnitt vermieden werden.

Die bisherige feste Zuordnung von einem speziellen Speicher zur jeweiligen Signalverarbeitungseinrichtung weist den Nachteil auf, daß die einzelnen signalverarbeitungsspezifischen Speicherbauelemente relativ teuer sind, insbesondere dann, wenn sie mit den Signalverarbeitungseinrichtungen in einem einzigen integrierten Schaltungschip angeordnet sind. Darüber hinaus entspricht es der Erfahrung, daß nicht alle im Gerät vorgesehen Signalverarbeitungsverfahren gleichzeitig angewandt werden. Die im Fernsehgerät enthaltenen Speicherkapazitäten verursachen deshalb relativ hohe Kosten und werden nicht immer vollständig ausgenutzt.

In der US-A-4 809 069 ist eine Videosignalverarbeitungseinrichtung gezeigt, bei der zwei für verschiedene Signalverarbeitungsverfahren vorgesehene Einrichtungen mit einem gemeinsamen Speicher verbunden sind. Die im Speicher zwischengespeicherten Daten werden beiden Einrichtungen in gleicher Weise zugeführt. Die Einrichtungen greifen somit auf die gleichen Daten und den gleichen Speicherbereich zu.

In der WO-A-94/26066 ist eine Einrichtung zur Codierung eines Videodatenstroms beschrieben. Der Videodatenspeicherbus ist wahlweise als 16 Bit breiter Bus oder als 32 Bit breiter Bus konfigurierbar. Die im Speicher belegte Speichermenge bleibt gleich, ebenso die Speicherzugriffsbandbreite.

Im Dokument Patent Abstracts of Japan, Band 7, Nr. 256, (P-236), JP-A-58140863 ist die Zuordnung von Speichersegmenten zu verschiedenen CPUs beschrieben.

Die Aufgabe der Erfindung besteht darin, ein Fernsehgerät anzugeben, bei dem der Speicheraufwand verringert wird bzw. die vorhandene Kapazität besser genutzt wird. Die Wiedergabequalität soll dabei möglichst gleich bleiben.

Erfindungsgemäß wird dies durch ein Fernsehgerät nach den Merkmalen des Patentanspruchs 1 gelöst.

Das erfindungsgemäße Fernsehgerät enthält beispielsweise nur einen einzigen Speicher, auf den sämtliche signalverabeitende Einrichtungen zugreifen. Für den Speicher können herkömmliche, standardgemaß verfügbare Halbleiterspeicherbausteine verwendet werden. Die Speicherkapazität kann so dimensioniert werden, daß in allen Betriebszuständen der Speicher möglichst gut genutzt wird. Das Fernsehgerät kann hierzu eine Busarchitektur aufweisen. Jede Einrichtung sowie der Speicher ist mit dem Bus verbunden. Jede Einrichtung kann gleichberechtigt auf die im Speicher gespeicherten Daten zugreifen. Um Probleme mit hochfrequenter Abstrahlung und Wellenreflexionen bei mit hoher Geschwindigkeit ausgeführten Buszugriffen zu vermeiden, kann alternativ jeder einzelnen Einrichtung ein Speicher zugeordnet werden. Auf die einzelnen zugeordneten Speicher kann aber von einer anderen Signalverarbeitungseinrichtung zugegriffen werden, um diesen Speicher zu nutzen, wenn er von der Einrichtung, der er zugeordnet ist, momentan nicht verwendet wird.

Im Fernsehgerät ist eine Steuerungseinrichtung notwendig, durch die die Speicherzugriffe verwaltet werden. Die Steuerungseinrichtung muß insbesondere die Zuordnung einer jeweiligen Speichermenge an die verschiedenen Signalverarbeitungseinrichtungen festlegen. Diese Zuordnung kann vom jeweiligen Betriebszustand des Geräts und den gerade aktivierten Signalverarbeitungseinrichtungen, die einen Speicherbedarf aufweisen, abhängen.

In vorteilhafter Weiterbildung der Erfindung ist vorgesehen, daß die einzelnen Einrichtungen parametrisierbar sind. Dies bedeutet, daß ein Parameter, von dem die Frequenzbandbreite der Speicherzugriffe abhängig ist, einstellbar ist. Hierzu kann beispielsweise die Wortbreite der zu verarbeitenden und zwischenzuspeichernden Daten verändert werden. Andererseits kann durch Änderung des Verarbeitungsverfahrens die Anzahl der zu verarbeitenden und zwischenzuspeichernden Datenwerte verändert werden. Außerdem kann durch Änderung des Verarbeitungsverfahrens die Häufigkeit und Geschwindigkeit der Datenzugriffe verändert werden. Die Parametrisierbarkeit der jeweiligen Einrichtung in bezug auf diese oder ähnliche Verarbeitungsparameter bewirkt eine unterschiedliche Verarbeitungs- und Wiedergabequalität. Die Parametereinstellung kann herstellerseitig vorgenommen werden oder in Abhängigkeit von dem gerade eingestellten Betriebszustand des Geräts, zum Beispiel durch eine entsprechende Softwareänderung. Die Parameteranderung wird dabei derart ausgeführt, daß die im Fernsehgerät installierte Speicherkapazität möglichst gut ausgenutzt wird. Ein Benutzer des Fernsehgeräts nimmt die unterschiedliche Parametrisierung der Einheiten beispielsweise als Bildschärfeverlust oder einen höheren Rauschanteil bei der Bildverarbeitung oder bei der Audiosignalverarbeitung war, also als einen geringfügigen Qualitätsverlust.

Der im Fernsehgerät enthaltene Speicher ist erweiterbar, indem weitere Speicherbausteine gegebenenfalls auch nachträglich in dort vorhandene Sockel eingesteckt werden. Durch die Parametrisierbarkeit der einzelnen Signalverarbeitungseinrichtungen kann erreicht werden, daß auch die erhöhte Speicherkapazität möglichst effizient genutzt wird.

Nachfolgend wird die Erfindung anhand der in der Zeichnung dargestellten Figuren näher erläutert. Es zeigen:
- Figur 1: ein Fernsehgerät mit einer Busarchitektur,
- Figur 2: eine Verkettung von einzelnen Einheiten zugeordneten Speichern zu einem Gesamtspeicher und
- Figur 3: ein Belegungsbeispiel für den Speicher.

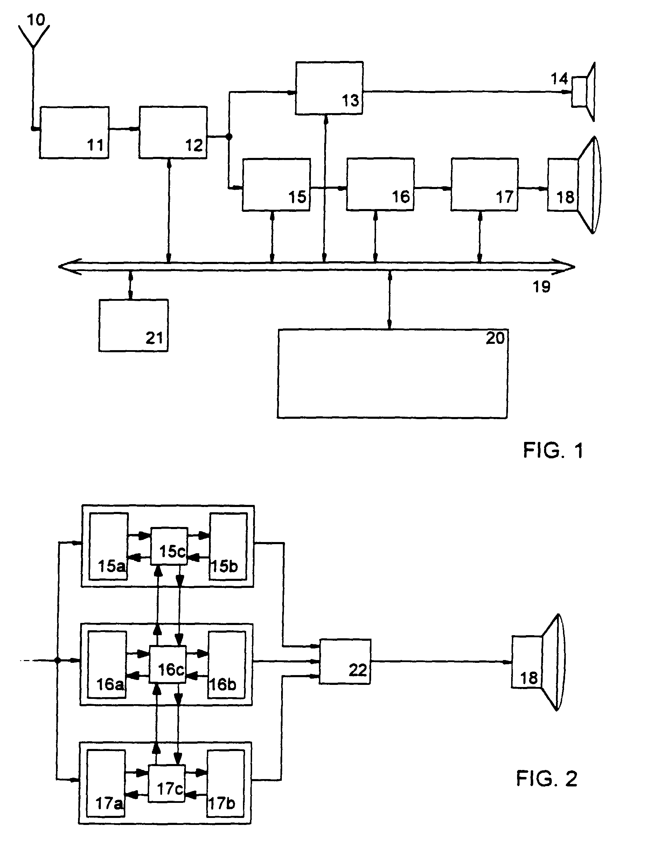

Dem Fernsehgerät gemäß Figur 1 ist über einen Eingangsanschluß, zum Beispiel eine Antenne 10 ein Fernsehsignal zuführbar. Das Signal des eingestellten Senders wird in einem Hochfrequenzteil 11, der beispielsweise einen Tuner, eine Zwischenfrequenzstufe und einen Demodulator enthält, in das Basisband umgesetzt. Am Ausgang der Einrichtung 11 liegt ein digitales, redundanzkomprimiertes Signal vor. In einer Datendekompressionseinrichtung 12 wird das Signal dekodiert und in einen Audio- und einen Videosignalanteil aufgespaltet. In der Audiosignalverarbeitungseinrichtung 13 wird ein Signal zur Ansteuerung eines Lautsprechers 14 erzeugt. Die Audiosignalverarbeitung kann hierzu ein Audiodekompressionsverfahren und ein entsprechendes Dekodierungsverfahren durchführen sowie eine Rauschbearbeitung. Im Videosignalverarbeitungszweig ist eine Einrichtung 15 zur Videosignalverarbeitung vorgesehen. In der Einrichtung 15 wird beispielsweise eine Bewegungsdekomprimierung, eine Verringerung des Rauschens und gegebenenfalls eine Zeilenflimmerbefreiung durchgeführt. Das von der Einrichtung 15 erzeugte Signal wird in einer Einrichtung 16 einer Nachbearbeitung unterzogen, die beispielsweise die Einblendung eines weiteren Bildkanals, Farbverbesserungen oder Vergrößerungen/Verkleinerungen von Bildanteilen sowie Standbildfunktionen ausführt. In der Einrichtung 17 wird dem von der Einrichtung 16 erzeugten Signal eine Grafikverarbeitung überlagert, indem beispielsweise Teletextdaten eingeblendet werden und über Teletextdienste oder externe Speichermedien zugeführte Grafikdaten eingeblendet werden. Durch das von der Einrichtung 17 erzeugte Bildsignal wird ein Bildschirm 18 angesteuert.

Alle digitalen Signalverarbeitungseinrichtungen 12, 13, 15, 16, 17 benötigen einen Speicher, in dem die von den jeweiligen Verarbeitungsverfahren zu verarbeitenden Eingangs- und/oder Ausgangsdaten zwischenzuspeichern sind. Hierzu sind diese Einrichtungen mit einem Datenbus 19 verbunden, auf den die jeweiligen Einrichtungen gleichberechtigt oder auch mit unterschiedlicher Hierarchie zugreifen können. Weiterhin ist am Datenbus 19 ein Speicher 20 angeschlossen. Über den Datenbus 19 können alle digitalen Signalverarbeitungseinrichtungen auf die für ihre Funktion im Speicher 20 reservierte Speicherkapazität zugreifen. Der Speicher 20 ist dabei ein herkömmlicher, zur Speicherung von Bild- und Audiodaten geeigneter Speicher. Der Speicher ist logisch zusammenhängend organisiert, was praktisch bedeutet, daß der gesamte Speicher allen Signalverarbeitungseinrichtungen zur Verfügung steht. Entsprechend dem Betriebszustand des Fernsehgerats wird die momentan notwendige Speicherkapazität den einzelnen Signalverarbeitungseinrichtungen zugeordnet. Darüber hinaus ist eine Einrichtung 21 vorgesehen, durch die die Zugriffe auf den Datenbus 19 überwacht werden. Es muß insbesondere sichergestellt werden, daß keine Zugriffskollisionen auftreten. Darüber hinaus wird von der Einrichtung 21 die momentane Speicherbelegung des Speichers 20 und Zuordnung zu den einzelnen Signalverarbeitungseinrichtungen überwacht. Hierfür kann eine Nachschlagetabelle vorgesehen werden, durch die den Adreßbereich des aktuell von jeder Einrichtung benutzten Speicherbereichs enthält. Die Signalverarbeitungseinrichtungen und die Steuerungseinrichtung 21 enthalten eine entsprechend zusammenwirkende Steuerungssoftware, so daß vor einer Aktivierung einer Signalverarbeitungseinrichtung in der Einrichtung 21 um den benötigten Speicherbedarf nachgefragt wird.

Alternativ zu der in Figur 1 gezeigten Busarchitektur kann auch die in Figur 2 gezeigte Anordnung mit verteilten Speichern angewandt werden. Beispielhaft dargestellt ist der Videosignalverarbeitungskanal mit den Einrichtungen 15, 16, 17, von denen jede einen Logikteil 15a, 16a, 17a enthält, der die Steuerungsfunktionen zur Abarbeitung des jeweiligen Verarbeitungsverfahrens enthält. Den Einrichtungen 15, 16, 17 ist unmittelbar jeweils ein eigener Halbleiterspeicher 15b, 16b, 17b zugeordnet. Eine Speicherschnittstelle 15c, 16c, 17c steuert die Zugriffe auf die jeweiligen Speicher. Die Einrichtungen 15c, 16c, 17c sind dabei derart ausgestaltet, daß bei Bedarf auch von der Einrichtung 16 auf den Speicher 17b zugegriffen werden kann, wenn von der Einrichtung 17a der Speicher 17b momentan nicht benutzt wird. Dies kann beispielsweise dann vorliegen, wenn von der Einrichtung 16 eine Bild-im-Bildeinblendung mit hoher Wiedergabequalität durchgeführt werden soll, bei der mindestens zwei Halbbilder zwischenzuspeichern sind, während von der Einrichtung 17 momentan keine Grafikverarbeitung oder Teletextverarbeitung durchgeführt wird. Die Speicher 15b, 16b, 17b sind wiederum logisch gesehen als ein einziger Speicher zu betrachten, wobei die jeweiligen Speicherabschnitte 15b, 16b, 17b getrennt voneinander realisiert sind. Bei Bedarf können die jeweiligen Speicher transparent von allen Einrichtungen benutzt werden. Diese bedarfsorientierte Zugriffssteuerung auf die jeweiligen Speicher wird durch die Steuerungseinrichtungen 15c, 16c, 17c durchgeführt. Im Vergleich zur Busarchitektur der Figur 1 weist die Architektur gemäß Figur 2 keine langen Busleitungen auf, so daß hochfrequente Abstrahlungen und Reflexionsprobleme vermieden werden. Ein Koppelglied 23 verbindet die einzelnen Einrichtungen 15, 16, 17 zur Ansteuerung des Bildschirms 18.

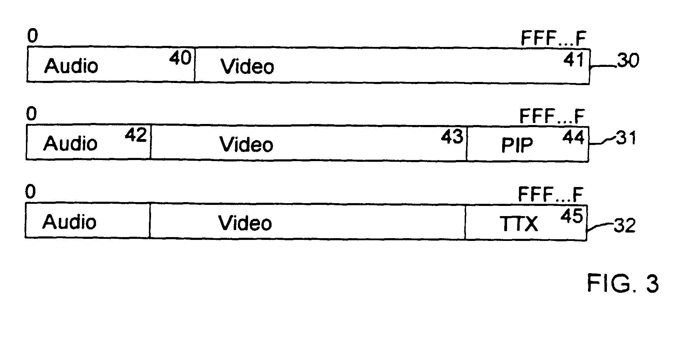

Gemäß Figur 3 reicht der gesamte zur Verfügung stehende Adreßraum sowohl im Speicher 20 als auch in den Speichern 15b, 16b, 17b von der Speicheradresse 0 bis zur Adresse FFF...F. Durch die Steuerungseinrichtung 21 beziehungsweise die jeweiligen Zugriffssteuerungen 15c, 16c, 17c wird der verfügbare Adreßraum den Signalverarbeitungseinrichtungen gemäß dem momentanen Betriebszustand des Geräts zugeordnet. Nach dem mit 30 bezeichneten Zuordnungsbeispiel wird der erste Bereich 40 zur Speicherung der Daten der Audiosignalverarbeitungseinrichtung 13 vorgesehen. Der übrige Speicherplatz 41 wird für die Videosignalverarbeitung, beispielsweise für die Bewegungsdekodierung und die Flimmerbefreiung vorgesehen, so daß die Einrichtung 15 Zugriffsberechtigung auf den Speicherbereich 41 erhält. Nach dem mit 31 bezeichneten Ausführungsbeispiel ist der für den Audiobereich vorgesehene Speicherplatz 42 verringert, so daß die Audiosignalverarbeitung in der Einrichtung 13 eine geringere Wiedergabequalität erzeugt. Für die Videosignalverarbeitung ist der Speicherbereich 43 vorgesehen. Für eine Bild-im-Bildeinblendung (Picture-In-Picture) wird ein Speicherbereich 44 reserviert. Nach dem Beispiel 32 wird der anfänglich für Bild-im-Bild-Einblendung 44 vorgesehene Speicherbereich als Speicherbereich 45 für Teletextverarbeitung reserviert. In diesem Fall kann keine Bild-im-Bild-Verarbeitung stattfinden.

Um die Speicheranordnung wie in Figur 3 gezeigt an den momentanen Betriebszustand anpassen zu können, ist es zweckmaßig, daß die Signalverarbeitungseinrichtungen parametrisierbar sind. Die Parametrisierung kann herstellerseitig durchgeführt werden und bleibt somit für das Fernsehgerät fest eingestellt. Sie kann auch durch den vom Benutzer momentan eingestellten Betriebszustand festgelegt werden, so daß die einer Einrichtung zugeordnete Speicherkapazität an den momentanen Betriebszustand angepaßt wird.

Wie oben ausführlich beschrieben, werden solche Paramter verändert, durch die die Frequenzbandbreite der Speicherzugriffe verändert wird. Beispielsweise kann in bezug auf die Audiosignalverarbeitungseinrichtung 13 beim Übergang vom Speicherbelegungsbeispiel 30 zum Beispiel 31 die Wortbreite der abzuspeichernden Daten verändert werden. Die Einrichtung 13 muß hierfür entsprechende Einstellungsmöglichkeiten vorsehen. Alternativ dazu könnte beispielsweise ein anderer, eine geringere zu speichernde Datenmenge erfordernder Verarbeitungsalgorithmus ausgeführt werden. Hierzu kann die von der Einrichtung 13 zu verarbeitende Software verändert werden. Die Parametrisierbarkeit hat zum Ziel, daß die von der Audioverarbeitungseinrichtung 13 zu verarbeitende und somit zu speichernde Datenmenge 42 geringer ist als die Datenmenge 40. Der Bediener des Fernsehgeräts erfährt diese Änderung in einer Verringerung der Qualität der Audiosignalverarbeitung derart, daß beispielsweise von einer High-fidelity-Verarbeitung im Beispiel 30 auf eine Mono-Verarbeitung im Beispiel 31 umgeschaltet wird.

Die Aufteilung des Speichers auf die Signalverarbeitungseinrichtungen hängt auch von der zeitlichen Reihenfolge ab, in der die Einrichtungen erstmalig aktiviert werden. Die Belegungssteuerung wird von der Steuerungseinrichtung 21 - wie oben detaillierter beschrieben - übernommen. Sofern der Speicher in manchen Speicherstellen Defekte aufweist, beeinflussen diese je nach dem vorherigen Betriebszustand des Geräts eine andere Signalverarbeitungsfunktion. Darüber hinaus kann durch die Steuerungseinrichtung 21 ein Speicherbereich mit Defekten ohne weiteres als nicht verfügbar in der dort vorgesehenen Nachschlagetabelle eingetragen werden. Dies ist insbesondere dann vorteilhaft, wenn dieser defekte Speicherbereich erst nach einiger Zeit im Betrieb etwa aufgrund von Alterungseffekten als defekt festgestellt werden sollte.

## Patentansprüche

1. Fernsehgerät enthaltend:
- eine erste und mindestens eine zweite Einrichtung (13, 15, 16, 17) zur Signalverarbeitung nach je einem unterschiedlichen Signalverarbeitungsverfahren mit jeweils unterschiedlichen Eingabe- und Ausgabedaten,
- einen logisch zusammenhängend organisierten Speicher (20; 15b, 16b, 17b) mit vorgegebener Speicherkapazität, der mit den Einrichtungen (13, 15, 16, 17) gekoppelt ist, um die von den jeweiligen Einrichtungen (13, 15, 16, 17) zu verarbeitenden Daten zu speichern,
- wobei mindestens eine der Einrichtungen (13, 15, 16, 17) wahlweise aktivierbar ist und jeder aktivierten Einrichtung ein unterschiedlicher Speicheranteil (40, ..., 45) des Speichers (20, 15b, 16b, 17b) zugeordnet ist und
- die Signalverarbeitung in den aktivierten Einrichtungen bezüglich der benötigten Speichermenge abhängig von dem ihr zugeordneten Speicheranteil (40, ..., 45) durchgeführt wird, so daß die Summe der Speicheranteile (40, ..., 45) die vorgegebene Speicherkapazität nicht überschreitet.

2. Gerät nach Anspruch 1,
**dadurch gekennzeichnet**, daß ein Datenbus (19) vorgesehen ist, an den die Einrichtungen und der Speicher mit gleicher Zugriffsberechtigung angeschlossen sind, und eine Zugriffssteuerungseinrichtung (21), durch die Lese- und Schreibvorgänge in bzw. aus dem Speicher kollisionsfrei gesteuert werden.

3. Gerät nach Anspruch 1,
**dadurch gekenzeichnet**, daß mit der ersten und der zweiten Einrichtung (15, 16) je ein eigener Halbleiterspeicher (15b, 16b) verbunden ist, daß jedem Halbleiterspeicher eine Speicherschnittstelle (15c, 16c) zur Zugriffssteuerung auf den Halbleiterspeicher zugeordnet ist und daß die Speicherschnittstellen derart ausgeführt ist, daß die von einer der Einrichtungen (15; 16) zu verarbeitenden Daten im mit der anderen der Einrichtungen (16 bzw. 15) verbundenen Halbleiterspeicher (16b bzw. 15b) speicherbar sind.

4. Gerät nach einem der Ansprüche 1 bis 3,
**dadurch gekennzeichnet**, daß die erste Einrichtung eine Einrichtung zur Audiosignalverarbeitung ist und die zweite Einrichtung eine Einrichtung zur Videosignalverarbeitung.

5. Gerät nach einem der Ansprüche 1 bis 4,
**dadurch gekennzeichnet**, daß mindestens eine der Einrichtungen zur Video- und Audiosignalverbeitung in bezug auf mindestens einen Verarbeitungsparameter, durch den die im Speicher zu speichernde Datenmenge und/oder die Wortbreite und/oder Zugriffsgeschwindigkeit beeinflußbar ist.

6. Gerät nach einem der Ansprüche 1 bis 5,
**gekennzeichnet durch** eine Steuerungseinrichtung (21; 15c, 16c, 17c), durch die die Zuordnung von Anteilen an Speicherkapazität des Speichers (20; 15c, 16c, 17c) an die ersten und zweiten Einrichtungen in Abhängigkeit von einem Betriebszustand des Geräts eingestellt wird.

## Claims

1. Television set containing:
- a first and at least one second device (13, 15, 16, 17) for processing signals according to in each case one different signal processing method comprising in each case different input and output data,
- a logically coherently organized memory (20; 15b, 16b, 17b) with a predetermined storage capacity, which is coupled to the devices (13, 15, 16, 17) in order to store the data to be processed by the respective devices (13, 15, 16, 17),
- wherein at least one of the devices (13, 15, 16, 17) can be optionally activated and a different memory proportion (40, ..., 45) of the memory (20, 15b, 16b, 17b) is allocated to each activated device and
- the signal processing in the activated devices is carried out in dependence on the memory proportion (40, ..., 45) allocated to it, with respect to the amount of storage needed, so that the sum of the memory proportions (40, ..., 45) does not exceed the predetermined storage capacity.

2. Set according to Claim 1, characterized in that a data bus (19) is provided to which the devices and the memory are connected, having equal access authorization, and an access control device (21) by means of which the read and write processes into and, respectively, out of the memory are controlled in a conflict-free manner.

3. Set according to Claim 1, characterized in that a separate semiconductor memory (15b, 16b) each is connected to the first and the second device (15, 16), in that a memory interface (15c, 16c) for controlling access to the semiconductor memory is allocated to each semiconductor memory and in that the memory interfaces are constructed in such a manner that the data to be processed by one of the devices (15; 16) can be stored in the semiconductor memory (16b or, respectively, 15b) connected to the other one of the devices (16 or, respectively, 15).

4. Set according to one of Claims 1 to 3, characterized in that the first device is a device for processing audio signals and the second device is a device for processing video signals.

5. Set according to one of Claims 1 to 4, characterized in that at least one of the devices for processing the video and audio signals with respect to at least one processing parameter by means of which the amount of data to be stored in the memory and/or the word length and/or access speed can be influenced.

6. Set according to one of Claims 1 to 5, characterized by a control device (21; 15c, 16c, 17c) by means of which the allocation of proportions of memory capacity of the memory (20; 15c, 16c, 17c) to the first and second devices is set in dependence on an operating state of the set.

## Revendications

1. Téléviseur comprenant
- un premier et au moins un deuxième dispositif (13, 15, 16, 17) pour le traitement des signaux, chacun selon un procédé de traitement des signaux différent, avec respectivement des données d'entrée et de sortie différentes,
- une mémoire organisée de façon logiquement cohérente (20 ; 15b, 16b, 17b), avec une capacité de mémoire préétablie, mémoire qui est couplée avec les dispositifs (13, 15, 16, 17) afin de sauvegarder les données qui doivent être traitées par les dispositifs respectifs (13, 15, 16, 17),
- sachant qu'au moins l'un des dispositifs (13, 15, 16, 17) peut être activé au choix, et qu'à chaque dispositif activé est affectée une portion de mémoire différente (40, ...,45) de la mémoire (20, 15b, 16b, 17b), et
- le traitement des signaux est mis en oeuvre dans les dispositifs activés en référence à la quantité de mémoire nécessaire, en fonction de la portion de mémoire qui lui est affectée (40 45), de telle sorte que le total des portions de mémoire (40, ..., 45) ne dépasse pas la capacité de mémoire préétablie.

2. Appareil selon la revendication 1,
**caractérisé en ce que:**
un bus de données (19) est prévu, auquel les dispositifs et la mémoire sont raccordés avec le même droit d'accès, et un dispositif de commande d'accès (21) par lequel sont commandées sans collisions des opérations de lecture et d'écriture vers ou depuis la mémoire.

3. Appareil selon la revendication 1,
**caractérisé en ce que**:
une mémoire à semi-conducteurs spécifique (15b, 16b) est respectivement reliée au premier et au deuxième dispositifs (15, 16), si bien qu'une interface de mémoire (15c, 16c) est affectée à chaque mémoire à semi-conducteurs pour la commande d'accès à la mémoire à semi-conducteurs , et en ce que les interfaces de mémoire sont réalisées de telle façon que les données à traiter par l'un des dispositifs (15, 16) peuvent être sauvegardées dans la mémoire à semi-conducteurs (16b ou 15b) qui est reliée à l'autre de ces dispositifs (16 ou 15).

4. Appareil selon l'une des revendications 1 à 3,
**caractérisé en ce que**:
le premier dispositif est un dispositif de traitement des signaux audio, et le deuxième dispositif un dispositif de traitement des signaux vidéo.

5. Appareil selon l'une des revendications 1 à 4,
**caractérisé en ce que**:
au moins l'un des dispositifs de traitement des signaux vidéo et audio peut être influencé au niveau d'au moins un des paramètres de traitement, par la quantité de données à sauvegarder dans la mémoire et/ou la largeur de mot et/ou la vitesse d'accès.

6. Appareil selon la revendication 1 à 5,
**caractérisé par:**
un dispositif de commande (21; 15c, 16c, 17c) par lequel l'affectation de portions de capacité de mémoire de la mémoire (20 ; 15c, 16c, 17c) est réglée sur le premier et le deuxième dispositifs en fonction d'un certain état de fonctionnement de l'appareil.
